# FASCICULE DE BREVET EUROPEEN

(11) **EP 2 479 415 B1**
(45) Date de publication et mention de la délivrance du brevet: **30.10.2013**
(21) Numéro de dépôt: 12151510.0
(22) Date de dépôt: 18.01.2012
(51) Int. Cl.: F02K 1/34, F02K 1/46

(54) **Réacteur d'aéronef comprenant un système de réduction de bruit**
Triebwerk mit einem Lärmreduzierungssystem
Aircraft jet engine including a system for reducing noise

(30) Priorité: 24.01.2011 FR 1150542
(43) Date de publication de la demande: 25.07.2012
(73) Titulaire: Airbus Operations, 31060 Toulouse (FR); Centre National de la Recherche Scientifique, 75016 Paris (FR); Université De Poitiers, 86034 Poitiers Cedex (FR)
(72) Inventeur: Huber, Jerome, 31700 Cornebarrieu (FR); Bonnet, Jean Paul, 86000 Poitiers (FR); Gomes, Luis, 86000 Poitiers (FR); Maury, Remy, 19360 Malemort (FR)
(74) Mandataire: Santarelli

(56) Documents cités:
- EP-A2- 1 464 822
- EP-A2- 2 116 730
- WO-A1-02/29232
- US-A1- 2007 152 104

## Description

La présente invention concerne un réacteur d'aéronef.

De façon connue, un réacteur d'aéronef se présente sous la forme d'une nacelle au centre de laquelle est positionnée une turbomachine.

Cette nacelle est destinée à être montée sous la voilure d'un aéronef par l'intermédiaire d'un mât de réacteur. La turbomachine est composée d'un générateur de gaz qui entraîne une soufflante montée sur l'arbre du générateur de gaz, en amont de ce dernier suivant la direction longitudinale de la nacelle de réacteur.

Le flux d'air qui traverse longitudinalement la nacelle pénètre en partie dans le générateur de gaz et participe à la combustion. Ce flux est appelé flux primaire et est éjecté en sortie du générateur. La partie du flux d'air entrant dans la nacelle et qui ne traverse pas le générateur de gaz est entrainée par la soufflante. Ce flux, appelé flux secondaire, s'écoule dans un passage annulaire, de façon concentrique par rapport au flux primaire.

Lors des phases de décollage, le flux de gaz qui est éjecté (flux primaire et secondaire) adopte des vitesses très élevées. A ces vitesses, la rencontre du flux éjecté avec l'air environnant, de même que la rencontre du flux primaire et du flux secondaire génèrent un bruit important.

On connait d'après la demande internationale WO2006/013243 un dispositif fluidique de réduction du bruit généré par un réacteur d'aéronef. Ce dispositif comporte des moyens de perturbation du flux primaire constitués d'au moins une paire de conduits répartis à la périphérie d'une tuyère et débouchant en sortie de ladite tuyère pour générer un jet en sortie de chaque conduit. Ces jets forment un triangle d'interaction avec le flux.

Il a été démontré qu'afin de réduire le bruit émané par le moteur dans tout le spectre de fréquences, il est nécessaire de pulser un jet de fréquence d'excitation trois fois supérieure à la fréquence fondamentale du flux de gaz. Il existe donc le besoin de concevoir un dispositif permettant une pulsation à haute fréquence afin d'obtenir une réduction de bruit plus importante.

On connait d'après le document US 2007/0152104 A1 un dispositif fluidique de réduction de bruit permettant une pulsation de jet anti-bruit à haute fréquence.

En outre, l'injection de fluide en continu impose de prélever en permanence ledit fluide, par exemple de l'air comprimé, du moteur ou d'une source alternative, ce qui peut réduire le débit du moteur. Il existe donc un besoin de réduire le bruit en haute fréquence provoqué par l'éjection du ou des flux de gaz en sortie de la nacelle de réacteur d'un aéronef, notamment lorsque les dimensions du réacteur sont importantes, sans avoir à prélever en permanence un flux de gaz du moteur ou d'une source indépendante.

A cet effet, l'invention a pour objet un réacteur d'aéronef, comprenant une tuyère destinée à éjecter un flux de gaz et un système de réduction du bruit généré par l'éjection du flux de gaz, caractérisé en ce que ledit système comportant :
- au moins un conduit d'éjection qui, d'une part, est raccordé en amont à au moins une cavité divisée en plusieurs chambres et, d'autre part, débouche, en aval, en sortie de tuyère de manière à éjecter au moins un jet de fluide destiné à interagir avec le flux de gaz éjecté,
- au moins un moyen de pulsation du jet de fluide apte à provoquer l'éjection dudit jet de fluide en sortie de tuyère et/ou à moduler sa vitesse par variation du volume contenu dans ladite au moins une cavité,
le système étant configuré pour l'équilibrage des pressions statiques entre les chambres, ledit au moins un moyen de pulsation comprenant un dispositif piézoélectrique qui est apte à faire varier le volume de ladite au moins une cavité, l'équilibrage des pressions statiques entre les chambres étant obtenu par la communication des chambres entre elles à l'arrivée du fluide dans ladite au moins une cavité, caractérisé en ce que le fluide provient d'un conduit d'amenée de fluide relié d'une part à une source de fluide et d'autre part à la cavité et est propulsé hors de la cavité à travers ledit conduit d'éjection.

La variation du volume dans la ou les cavités amont permet de pulser un ou plusieurs jets à une fréquence et une vitesse choisies de façon appropriée, notamment à une fréquence au moins trois fois supérieure à la fréquence fondamentale du flux de gaz éjecté. Le ou les jets ainsi pulsés interagissent avec le flux de gaz éjecté, contribuant à réduire le bruit du réacteur de façon plus efficace.

L'équilibrage des pressions statiques entre les chambres permet d'obtenir la même pression statique sur les parois délimitant les chambres, et ce quelle que soit leur nature.

Le ou les moyens de pulsation comprennent notamment un dispositif piézoélectrique qui est apte à faire varier le volume de la ou des cavités remplies de fluide.

Cette variation de volume crée un différentiel de pression entre la cavité et l'air ambiant, donnant ainsi lieu à une injection d'air.

Ainsi, un premier mode de fonctionnement, dit de « jet synthétique », permet de pulser ponctuellement un jet de fluide prélevé d'une source extérieure de pression quelconque à une vitesse donnée. Ce mode de fonctionnement est particulièrement intéressant dans le cas où le fluide est de l'air et la source extérieure l'air ambiant. En effet, dans ce cas, la consommation électrique est le seul apport d'énergie nécessaire pour mettre en oeuvre la pulsation, l'air ne nécessitant pas d'être comprimé. Ainsi, ce premier mode de fonctionnement consomme moins d'énergie par rapport à un système à pulsations continues.

Selon une caractéristique, le dispositif piézoélectrique de variation de volume comporte au moins une membrane déformable piézoélectrique disposée dans ladite au moins une cavité. Cette membrane est excitée par un signal électrique, typiquement périodique et de préférence sinusoïdal.

L'équilibrage des pressions statiques entre les chambres permet, notamment dans le mode de réalisation évoqué ci-dessus, d'obtenir une même pression statique sur chacune des membranes, ce qui facilite leur excitation et ainsi le contrôle du volume de la ou des cavités. La variation du volume de la ou des cavités est maximale car les membranes réagissent de façon identique à l'impulsion électrique d'excitation.

Lorsque le fluide est de l'air, le moyen de pulsation comprend en outre une alimentation en air comprimé qui impose une pression prédéterminée.

L'air comprimé peut notamment être prélevé sur des compresseurs axiaux du moteur du turboréacteur de l'aéronef si ce dernier en est pourvu, de préférence de manière à diminuer le débit de flux de ce dernier de moins de 1 %.

Cette alimentation en air comprimé peut être utilisée lorsqu'il est nécessaire d'appliquer davantage d'excitation sur l'écoulement du flux en sortie de réacteur pour contrôler le développement de la couche de mélange. Dans ce cas, la variation de volume engendrée par la déformation des membranes piézoélectriques permet de moduler la vitesse du jet, de préférence de manière périodique. Ce second mode de fonctionnement est appelé « modulation de jet ».

Selon une caractéristique, le moyen de pulsation est piloté par un servomécanisme qui permet de le faire basculer d'un mode à l'autre.

Selon une caractéristique, la division de la cavité en plusieurs chambres est obtenue par la présence d'au moins une membrane déformable piézoélectrique. Ladite au moins une membrane est disposée entre une chambre centrale et la paroi interne de la cavité.

Afin d'augmenter l'amplitude de la modulation de la vitesse du jet en sortie de réacteur, la variation du volume contenu dans la ou les cavités est obtenue en excitant soit la résonance mécanique de la ou des membranes déformables piézoélectriques, soit la résonance mécanique de la ou des membranes déformables piézoélectriques et la résonance acoustique de la ou des cavités.

Selon une caractéristique, la résonance acoustique de ladite au moins cavité est excitée par modulation d'amplitude d'une onde porteuse du signal électrique destiné à exciter la ou les membranes déformables piézoélectriques.

Afin de simplifier la mise en oeuvre du système, la ou les cavités sont divisées en une chambre centrale et deux chambres latérales par la présence de deux membranes déformables piézoélectriques disposées entre la chambre centrale et la paroi interne de la ou des cavités.

Plus particulièrement, une paire de membranes déformables piézoélectriques sont disposées de part et d'autre de la chambre centrale, l'espace entre chaque membrane et la paroi interne de la ou des cavités formant respectivement deux chambres latérales.

Afin d'obtenir de meilleurs performances sur la réduction de bruit, en particulier à grande échelle, le système de réduction de bruit comprend plusieurs moyens de pulsation disposés en parallèle.

Dans ce cas, le nombre de moyens de pulsation est choisi en fonction du débit souhaité pour le jet de fluide compte tenu du débit d'un seul moyen de pulsation.

Dans un mode de réalisation particulier, le système de réduction de bruit comprend plusieurs moyens de pulsation disposés en parallèle et qui sont aptes à provoquer l'éjection du jet de fluide en sortie de tuyère, à savoir plusieurs moyens de pulsation fonctionnant en mode « jet synthétique ».

L'avantage d'un tel mode de réalisation est de ne pas nécessiter d'apport en air comprimé.

Dans un autre mode de réalisation, le système de réduction de bruit comprend plusieurs moyens de pulsation disposés en parallèle et qui sont aptes à moduler la vitesse du jet de fluide par variation du volume contenu dans ladite au moins une cavité, à savoir plusieurs moyens de pulsation fonctionnant en mode « modulation de jet ».

Un tel mode de réalisation augmente l'incidence des jets sur le flux de gaz éjecté par le moteur.

L'invention a également pour objet un aéronef comprenant au moins un réacteur d'aéronef conforme au bref exposé mentionné ci-dessus.

D'autres caractéristiques et avantages apparaitront au cours de la description qui va suivre, donnée à titre d'exemple non limitatif et faite en référence aux dessins annexés, sur lesquels :
- la figure 1 est une vue schématique en perspective d'une extrémité aval d'une paroi de nacelle équipée d'un système de réduction du bruit selon un mode de réalisation de l'invention ;
- la figure 2 est une vue schématique en perspective d'un détail d'un système de réduction de bruit comprenant plusieurs moyens de pulsation selon l'invention ;
- la figure 3 est une vue éclatée d'un moyen de pulsation selon un mode de réalisation ;
- la figure 4 est une vue schématique en perspective d'une coupe verticale du moyen de pulsation de la figure 3 ;
- la figure 5 est un agrandissement de la figure 4 autour de l'entrée du moyen de pulsation.

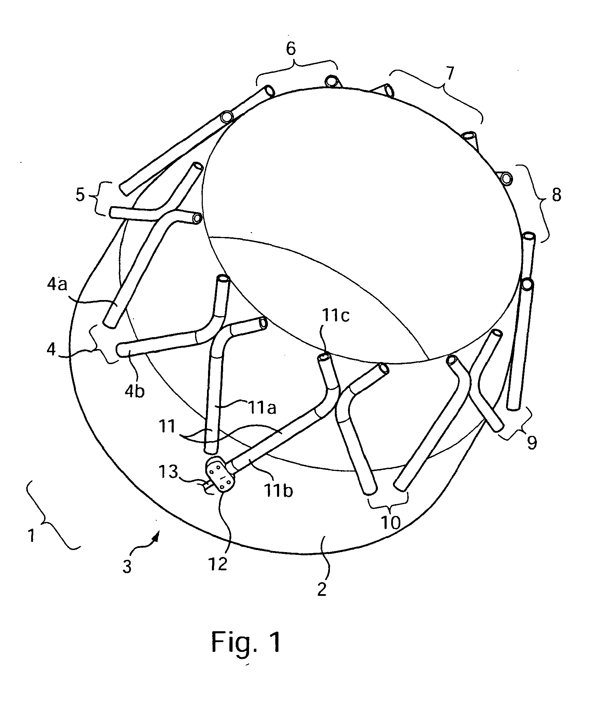

Comme représenté sur la figure 1, un système de réduction du bruit selon l'invention équipe la paroi d'un réacteur 1. Le réacteur 1 comporte une tuyère 2 dans laquelle s'écoule un flux de gaz qui est éjecté à l'extrémité aval de la paroi de la tuyère 2. Le système de réduction de bruit 3 comporte des dispositifs fluidiques 4, 5, 6, 7, 8, 9, 10, 11, aptes à éjecter chacun un jet de fluide. Ces dispositifs comprennent des paires de conduits (4a, 4b ... 11 a, 11 b), par exemple régulièrement réparties à la périphérie extérieure de la paroi de la tuyère 2. Par exemple, chaque dispositif comprend une paire de conduits. Chacun des conduits comporte par exemple une première partie droite, un coude, et une deuxième partie droite dont l'orifice de sortie aval est dirigé vers l'extrémité de la tuyère. Des moyens de pulsation des jets se trouvent à l'entrée amont des dispositifs fluidiques. Par souci de clarté, un seul moyen de pulsation 12 est représenté sur la figure 1 à l'entrée du conduit 11 b. Toutefois, un moyen de pulsation équipe chaque conduit.

Le conduit 11 b, d'une part, est raccordé en amont à au moins une cavité située à l'intérieur du moyen de pulsation 12 (figure 1) et, d'autre part, débouche en aval, en sortie de tuyère, par un orifice débouchant 11 c par lequel un jet de fluide est éjecté. Un conduit 13 d'amenée de fluide (représenté partiellement sur la figure 1) relie le moyen de pulsation 12 à une source de fluide non représentée (par exemple de l'air comprimé). D'autres agencements du système de réduction de bruit 3 sont bien entendu envisageables.

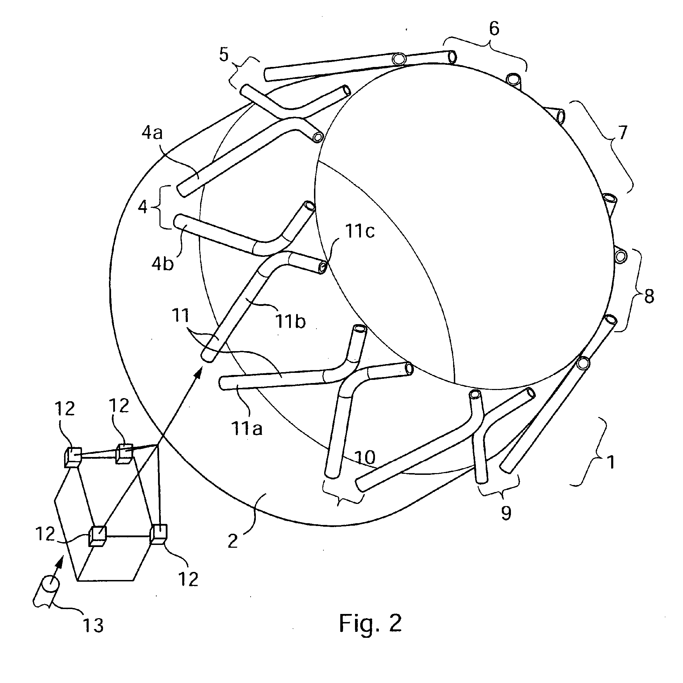

La figure 2 illustre un mode de réalisation d'un système de réduction de bruit comportant plusieurs moyens de pulsation 12.

Dans ce mode de réalisation, les moyens de pulsation 12 sont agencés en parallèle et coopèrent de manière à pulser leurs jets de fluide dans le même conduit 11 b.

On notera que le système de réduction de bruit de la figure 2 peut comporter plusieurs moyens de pulsation pour chaque conduit ou plusieurs moyens de pulsation pour deux conduits d'un même dispositif fluidique ou pour plusieurs conduits de plusieurs dispositifs fluidiques. L'agencement des moyens de pulsation de chaque dispositif fluidique peut être identique ou non pour tous les dispositifs.

Ils sont par ailleurs alimentés, le cas échéant, par la même source d'air comprimé. Cette alimentation est décrite par la suite.

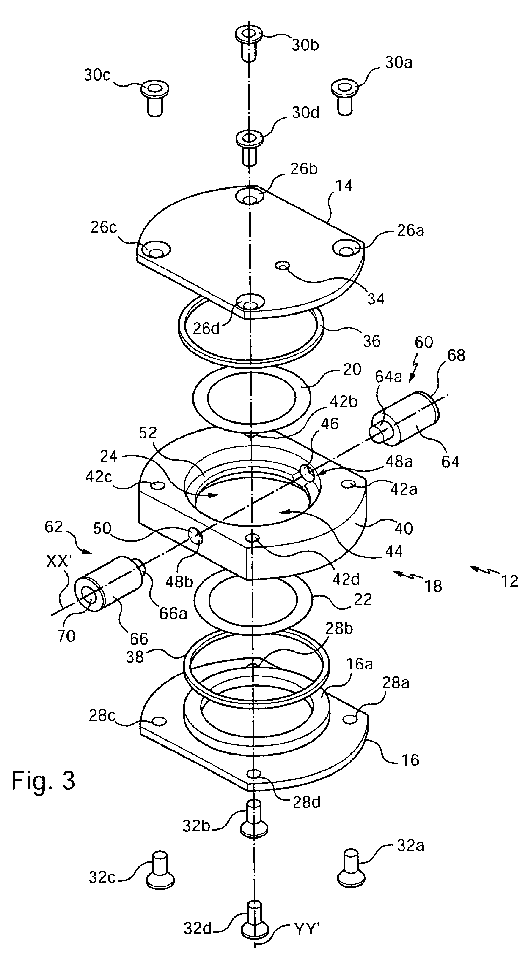

Comme représenté sur la figure 3, un moyen de pulsation 12 comprend deux capots 14, 16 qui sont disposés en vis-à-vis l'un de l'autre selon une direction YY' perpendiculaire à l'axe du jet XX'. Le moyen de pulsation 12 comprend également une partie centrale 18 comprenant des membranes déformables piézoélectriques, par exemple deux, 20, 22 (dispositif piézoélectrique) et une cavité 24 définie par ces membranes comme on le verra plus loin. Les capots 14, 16 comportent chacun deux côtés parallèles droits reliés par deux côtés en arc de cercle, de sorte que leur forme soit sensiblement rectangulaire arrondie. Ces capots 14, 16 comportent respectivement des trous filetés débouchants 26a-d et 28a-d percés selon la direction YY', par exemple au nombre de quatre. Ces trous filetés sont par exemple répartis aux quatre coins des capots 14, 16 et sont destinés à accueillir des vis 30a-d et 32a-d. Les capots 14, 16 sont également percés d'un trou 34 selon la direction YY', permettant le passage de câbles électriques non représentés sur la figure 3. Ces trous 34 se trouvent par exemple à proximité de la portion centrale des capots 14, 16.

La portion centrale de la surface intérieure de chacun des capots 14, 16 comprend, dans la direction YY', une extension annulaire 16a (non visible pour le capot 14) destinée à s'insérer respectivement dans la partie supérieure et la partie inférieure de la partie centrale 18 qui possèdent chacune un évidement de forme complémentaire à l'extension annulaire correspondante. Ces deux extensions annulaires (axiales) comportent chacune sur leur partie externe un logement circulaire périphérique destiné à accueillir chacun un joint torique, respectivement 36,38.

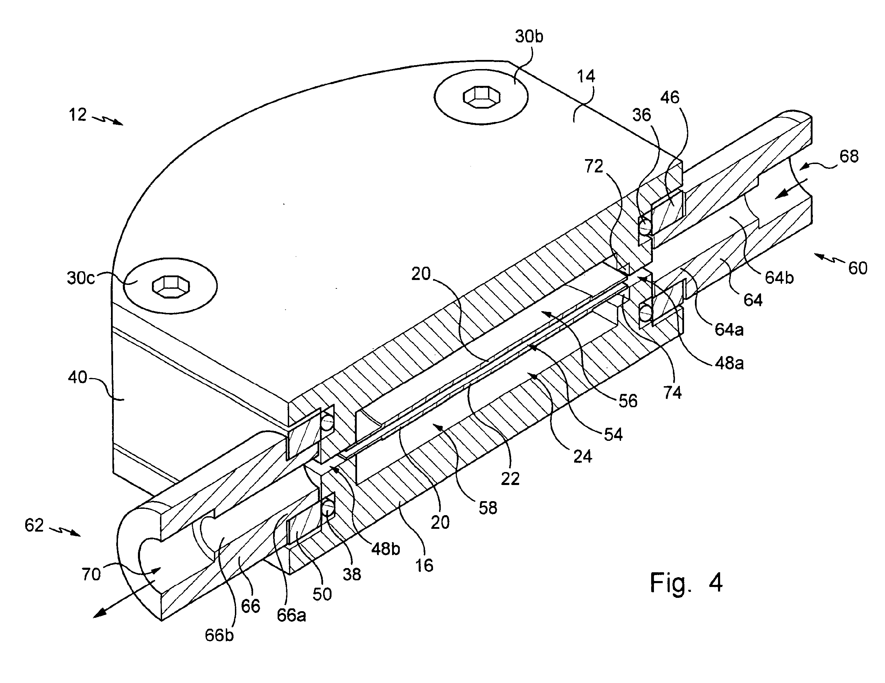

Lors de l'assemblage des différents éléments, les capots 14, 16 reposent dans la direction YY' respectivement sur les parties supérieure et inférieure du corps 40 de la partie centrale 18, définissant ainsi entre les capots une cavité interne 24 (figure 4).

Le corps 40 comporte deux côtés droits reliés par deux côtés en arc de cercle, de sorte que sa forme soit sensiblement rectangulaire arrondie, tout comme les capots 14, 16 qui coopèrent avec celui-ci.

Le corps 40 est percé dans la direction YY' de trous filetés débouchants 42a-d, par exemple au nombre de quatre. Ces trous filetés sont de préférence répartis aux quatre coins du corps 40 et sont destinés à recevoir les vis 30a-d d'une part, dans leur partie supérieure, et les vis 32a-d d'autre part, dans leur partie inférieure.

Le corps 40 est également percé dans cette même direction YY' d'une ouverture 44 traversante, avantageusement située dans la partie centrale du corps. La partie latérale du corps 40 est, quant à elle, percée selon l'axe XX', du côté de l'entrée de l'air, d'un premier trou fileté 46 débouchant dans l'ouverture centrale 44 à travers un conduit 48a nommé ci-après « entrée d'air ».

De même, un second trou fileté 50 est percé du côté de la sortie de jet selon l'axe XX', et débouche dans l'ouverture 44 à travers un conduit 48b nommé ci-après « sortie de jet». Les deux conduits 48a et 48b sont alignés l'un avec l'autre selon la direction XX', de même que les trous filetés 46, 50.

En outre, le corps 40 est muni d'un rebord annulaire interne 52 agencé sur la paroi interne délimitant l'ouverture 44, de préférence situé en son centre, et qui est interrompu au niveau des conduits 48a et 48b.

Lors de l'assemblage des éléments constitutifs du moyen de pulsation 12, les membranes 20 et 22 viennent en appui respectivement de part et d'autre du rebord annulaire 52.

Selon le mode de réalisation présenté dans cette figure et dans la figure 4, la cavité 24 est divisée en une chambre centrale 54 située entre les deux membranes, et deux chambres latérales 56 et 58 de part et d'autre de celles-ci. Comme illustré en figure 4, la chambre latérale 56 est située entre la membrane 20 et la paroi interne du capot située à l'intérieur de l'extension annulaire (non visible sur la figure) du capot 14, tandis que la chambre latérale 58 est située, de façon symétrique, entre la membrane 22 et la paroi interne du capot située à l'intérieur de l'extension annulaire 16a axiale du capot 16. Le détail de ces chambres sera décrit plus loin.

Une fois les membranes 20, 22 disposées de part et d'autre du rebord annulaire 52, les extensions annulaires 16a (selon YY') des capots 14, 16 viennent ponctuellement pincer les membranes 20, 22 sur une zone périphérique de celles-ci agencée contre le rebord 52, hormis dans la zone située au niveau des conduits 48a et 48b. Les capots 14, 16 et le corps principal 40 sont ensuite assemblés en utilisant les vis 30a, 30b, 30c, 30d et 32a, 32b, 32c, 32d et des joints toriques 36, 38. On notera que d'autres moyens d'assemblage alternatifs peuvent être utilisés.

Enfin, les deux trous filetés 46,50 permettent l'agencement de conduits externes 60 et 62. Ces conduits sont composés d'une partie tubulaire principale 64, 66 et d'une partie tubulaire secondaire filetée de diamètre inférieur 64a, 66a.

Les parties tubulaires filetées 64a, 66a sont vissées respectivement dans les trous filetés 46, 50. Les parties tubulaires filetées 64a, 66a communiquent avec la cavité 24 respectivement via l'entrée d'air 48a et la sortie de jet 48b. Le conduit d'amenée ou d'entrée 60 est muni d'un orifice d'entrée 68, à l'opposé de l'entrée d'air 48a. Cet orifice est relié au système, non représenté, d'alimentation en air (comprimé ou non), par exemple via le conduit 13 de la figure 1 pour le dispositif fluidique 11. L'air peut notamment provenir des compresseurs axiaux du moteur du turboréacteur de l'aéronef. Le conduit d'éjection ou de sortie 62 est muni, quant à lui, d'un orifice de sortie 70, à l'opposé de la partie tubulaire filetée 66a, et donc de la sortie de jet 48b. L'orifice de sortie est relié à l'un des dispositifs fluidiques 4, 5, 6, 7, 8, 9, 10, 11 représentés en figure 1.

Les éléments précédemment décrits sont présentés assemblés dans la figure 4.

Sur la figure 4, les vis 30a, 30d et 32 a-d de solidarisation des capots et du corps ne sont pas représentées. Les conduits 60, 62 sont insérés respectivement dans les trous filetés 46, 50 et fixés au corps 40 par vissage respectivement par l'intermédiaire des parties tubulaires filetées 64a, 66a. On notera que l'entrée d'air 48a est formée d'un conduit rectiligne s'élargissant dans la cavité 24 grâce à deux épaulements 72, 74, aménagés dans l'extension axiale de chaque capot, de sorte que le conduit 48a communique directement avec les trois chambres 54, 56 et 58. Ainsi, l'air peut entrer à la fois dans la chambre principale 54 et dans les deux chambres latérales 56, 58. Cet aspect sera détaillé plus loin. On notera qu'à l'inverse, la sortie de jet 48b est un conduit rectiligne sans épaulement, c'est-à-dire que les deux membranes sont en contact avec les deux extensions annulaires des capots au droit du conduit 48b. Ainsi, seul le flux d'air provenant de la chambre principale 54 peut se diffuser dans le conduit 62, l'air présent dans les chambres latérales ne communiquant pas directement avec le conduit 48b.

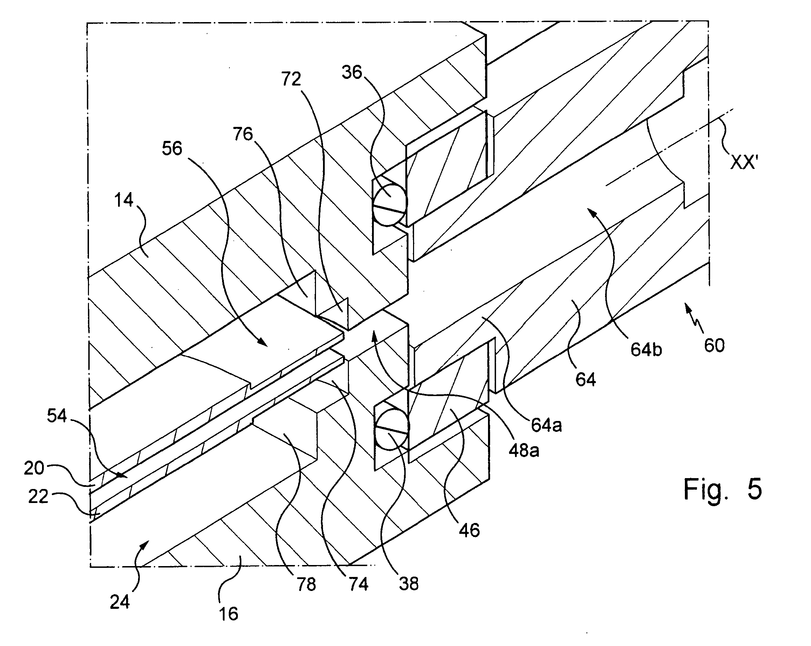

Le détail de l'entrée d'air 48a est illustré en figure 5. L'air comprimé ou l'air prélevé du réacteur entre par le canal 64b de la partie tubulaire principale 64 du conduit 60, lequel débouche dans l'entrée d'air 48a. Cette entrée d'air en communication avec la cavité 24 comporte les deux épaulements 72 et 74 de telle sorte que la chambre principale 54 et les chambres latérales 56, 58 communiquent entre elles. Ceci permet notamment d'assurer l'équilibrage des pressions statiques sur chacune des membranes. Deux autres épaulements 76, 78 se trouvent dans le prolongement des épaulements 72, 74 suivant l'axe XX', respectivement de manière à augmenter la hauteur axiale (YY') des deux chambres 56, 58. Ainsi, les chambres latérales 56, 58 sont chacune de forme sensiblement cylindrique. La chambre centrale 54 est, quant à elle, de forme cylindrique.

Dans le mode de fonctionnement produisant un « jet synthétique », l'air provenant du conduit 60 passe successivement dans l'entrée de jet 48a, puis dans les chambres 54, 56 et 58. Une fois l'air introduit dans les chambres, un servomécanisme connu en soi (non représenté) pouvant notamment comporter une vanne mobile, isole de façon étanche, d'une part les trois chambres entre elles, et, d'autre part, les chambres de l'amenée de fluide. Un signal électrique est généré par un système électronique (non représenté) composé d'un générateur de fréquence variable et d'un module d'amplification du signal et est appliqué aux membranes déformables piézoélectriques 20, 22. Ce signal fait varier le volume de la chambre centrale 54 en excitant la résonance acoustique des membranes 20, 22. On notera que dans d'autres modes de réalisation, la variation de volume peut s'effectuer dans une autre partie de la cavité. Afin d'augmenter l'amplitude de la déformation des membranes 20, 22, la résonance acoustique de la cavité 24 est avantageusement excitée par modulation d'amplitude d'une onde porteuse du signal électrique destiné à exciter les membranes 20, 22. La variation de volume de la chambre centrale 54 a pour effet d'augmenter la pression en son sein. Cette différence de pression entre l'air dans la chambre centrale et l'air extérieur pousse l'air contenu dans la chambre centrale 54 dans le conduit de sortie 62. Il passe ensuite, par exemple, par le conduit 11 b auquel il est relié pour interagir avec le flux de gaz en sortie de tuyère 2. L'air est évacué par l'orifice de sortie 11 c sous la forme d'un jet, sous une pression de préférence par exemple inférieure à deux bars pour ne pas endommager les dispositifs fluidiques 4-11.

Dans le mode de fonctionnement dénommé « modulation de jet », l'air amené par le conduit 60 est prélevé d'un circuit d'air comprimé provenant de façon générale du moteur afin de contrôler sa pression.

Dans ce cas, la vanne du servomécanisme laisse passer l'air comprimé dans chacune des chambres de façon à ce que l'air puisse librement circuler entre elles.

De même que dans le mode « jet synthétique », la résonance des membranes 20, 22 et la résonance acoustique de la cavité 24 sont excitées afin de faire varier le volume des membranes 20 et 22 et ainsi faire varier le volume dans la chambre centrale 54. Dans ce mode de fonctionnement cependant, c'est la pression intrinsèque constante de l'air comprimé fourni de manière continue qui le propulse hors de la cavité à travers le conduit d'éjection ou de sortie 62. Le rôle des membranes est d'augmenter et de réduire la vitesse de l'air de façon périodique. L'effet cyclique ainsi obtenu est qualifié de « modulation de jet ».

D'autres formes de membranes et de chambres peuvent être adoptées. Ainsi, dans un second mode de réalisation non représenté, la cavité 24 n'est divisée qu'en deux chambres. La cavité définie entre les deux capots, à l'intérieur du corps 40, possède une forme générale sensiblement cylindrique, l'axe du cylindre étant orienté suivant l'axe XX'. Un conduit cylindrique central d'axe XX' divise la cavité en deux chambres : une chambre centrale interne au conduit et une chambre périphérique entourant le conduit central. Dans ce mode de réalisation, une seule membrane déformable piézoélectrique entoure le conduit central.

Comme pour le mode de réalisation de la figure 4, le conduit central possède une extrémité qui est en contact avec les extensions axiales des capots au niveau du conduit 48b. Toutefois, l'autre extrémité opposée disposée en vis-à-vis du conduit 48a est libre de manière à permettre l'introduction de fluide dans la chambre périphérique annulaire.

On notera qu'alternativement le conduit central est supprimé et la seule membrane est configurée de manière à diviser la cavité en deux chambres.

## Revendications

1. Réacteur d'aéronef, comprenant une tuyère (2) destinée à éjecter un flux de gaz et un système de réduction du bruit (3) généré par l'éjection du flux de gaz, **caractérisé en ce que** ledit système comportant :
- au moins un conduit (11a) d'éjection qui, d'une part, est raccordé en amont à au moins une cavité (24) divisée en plusieurs chambres (54, 56, 58) et, d'autre part, débouche, en aval, en sortie de tuyère (2) de manière à éjecter au moins un jet de fluide destiné à interagir avec le flux de gaz éjecté,
- au moins un moyen de pulsation (12) du jet de fluide apte à provoquer l'éjection dudit jet de fluide en sortie de tuyère et/ou à moduler sa vitesse par variation d'un volume à l'intérieur de ladite au moins une cavité (24),
le système étant configuré pour l'équilibrage des pressions statiques entre les chambres (54, 56, 58), ledit au moins un moyen de pulsation (12) comprenant un dispositif piézoélectrique qui est apte à faire varier ledit volume à l'intérieur de ladite au moins une cavité, l'équilibrage des pressions statiques entre les chambres (54, 56, 58) étant obtenu par la communication des chambres (54, 56, 58) entre elles à l'arrivée du fluide dans ladite au moins une cavité (24), **caractérisé en ce que** le fluide provient d'un conduit d'amenée de fluide relié d'une part à une source de fluide et d'autre part à la cavité et est propulsé hors de la cavité à travers ledit conduit d'éjection.

2. Réacteur d'aéronef selon la revendication 1, **caractérisé en ce que** le dispositif piézoélectrique de variation de volume comporte au moins une membrane déformable piézoélectrique (20, 22) disposée dans ladite au moins une cavité (24).

3. Réacteur d'aéronef selon l'une des revendications 1 à 2, **caractérisé en ce que** le moyen de pulsation (12) comprend une alimentation en air comprimé.

4. Réacteur selon l'une des revendications 1 à 3, **caractérisé en ce que** le moyen de pulsation (12) est piloté par un servomécanisme.

5. Réacteur selon la revendication 4, **caractérisé en ce que** la variation de volume à l'intérieur de ladite au moins une cavité (24) est obtenue en excitant soit la résonance mécanique de ladite au moins une membrane déformable piézoélectrique (20,22), soit la résonance mécanique de ladite au moins une membrane déformable piézoélectrique (20,22) et la résonance acoustique de ladite au moins une cavité (24).

6. Réacteur selon la revendication 5, **caractérisé en ce que** la résonance acoustique de ladite au moins une cavité (24) est excitée par modulation d'amplitude d'une onde porteuse du signal électrique destiné à exciter ladite au moins une membrane déformable piézoélectrique (20,22).

7. Réacteur selon la revendication 1, **caractérisé en ce que** ladite au moins une cavité (24) est divisée en une chambre centrale (54) et deux chambres latérales (56, 58) par la présence de deux membranes déformables piézoélectriques disposées entre la chambre centrale (54) et la ou les parois internes de ladite au moins une cavité (24).

8. Réacteur selon l'une des revendications 1 à 7, **caractérisé en ce que** le système de réduction de bruit comprend plusieurs moyens de pulsation disposés en parallèle.

9. Réacteur selon l'une des revendications 1 à 8, **caractérisé en ce que** le système de réduction de bruit comprend plusieurs moyens de pulsation disposés en parallèle et qui sont aptes à provoquer l'éjection du jet de fluide en sortie de tuyère.

10. Réacteur selon l'une des revendications 1 à 9, **caractérisé en ce que** le système de réduction de bruit comprend plusieurs moyens de pulsation disposés en parallèle et qui sont aptes à moduler la vitesse du jet de fluide par variation du volume contenu dans ladite au moins une cavité.

11. Aéronef comprenant un réacteur selon l'une des revendications 1 à 10.

## Patentansprüche

1. Triebwerk für Luftfahrzeuge, umfassend eine Düse (2), die dazu bestimmt ist, einen Gasstrom auszustoßen, und ein System (3) zur Verminderung von Lärm, der beim Ausstoßen des Gasstroms erzeugt wird, **dadurch gekennzeichnet, dass** das System umfasst:
- zumindest einen Ausstoßkanal (11a), der einerseits stromaufwärts an zumindest einen Hohlraum (24) angeschlossen ist, der in mehrere Kammern (54, 56, 58) unterteilt ist, und andererseits stromabwärts am Auslass der Düse (2) ausmündet, so dass zumindest ein Fluidstrahl ausgestoßen wird, der dazu bestimmt ist, in Wechselwirkung mit dem ausgestoßenen Gasstrom zu treten,
- zumindest ein Mittel (12) zur Pulsation des Fluidstrahls, das dazu geeignet ist, den Ausstoß des Fluidstrahls am Düsenauslass hervorzurufen und/oder seine Geschwindigkeit durch Änderung eines Volumens im Inneren des zumindest einen Hohlraums (24) zu modulieren,
wobei das System für den Ausgleich der statischen Drücke zwischen den Kammern (54, 56, 58) eingerichtet ist, wobei das zumindest eine Pulsationsmittel (12) eine piezoelektrische Vorrichtung aufweist, die dazu geeignet ist, das Volumen im Inneren des zumindest einen Hohlraums zu verändern, wobei der Ausgleich der statischen Drücke zwischen den Kammern (54, 56, 58) durch Kommunizieren der Kammern (54, 56, 58) untereinander bei Eintreffen des Fluids in den zumindest einen Hohlraum (24) erreicht wird, **dadurch gekennzeichnet, dass** das Fluid aus einem Fluidzuführkanal kommt, der einerseits mit einer Fluidquelle und anderseits mit dem Hohlraum verbunden ist und durch den Ausstoßkanal aus dem Hohlraum ausgetrieben wird.

2. Triebwerk für Luftfahrzeuge nach Anspruch 1, **dadurch gekennzeichnet, dass** die piezoelektrische Vorrichtung zum Verändern des Volumens zumindest eine verformbare piezoelektrische Membran (20, 22) umfasst, die in dem zumindest einen Hohlraum (24) angeordnet ist.

3. Triebwerk für Luftfahrzeuge nach einem der Ansprüche 1 bis 2, **dadurch gekennzeichnet, dass** das Pulsationsmittel (12) eine Versorgung mit Druckluft umfasst.

4. Triebwerk nach einem der Ansprüche 1 bis 3, **dadurch gekennzeichnet, dass** das Pulsationsmittel (12) über einen Servomechanismus angesteuert wird.

5. Triebwerk nach Anspruch 4, **dadurch gekennzeichnet, dass** die Änderung des Volumens im Inneren des zumindest einen Hohlraums (24) durch Erregen entweder der mechanischen Resonanz der zumindest einen verformbaren piezoelektrischen Membran (20, 22) oder der mechanischen Resonanz der zumindest einen verformbaren piezoelektrischen Membran (20, 22) und der akustischen Resonanz des zumindest einen Hohlraums (24) erreicht wird.

6. Triebwerk nach Anspruch 5, **dadurch gekennzeichnet, dass** die akustische Resonanz des zumindest einen Hohlraums (24) durch Amplitudenmodulation einer Trägerwelle des elektrischen Signals erregt wird, das dazu bestimmt ist, die zumindest eine verformbare piezoelektrische Membran (20, 22) zu erregen.

7. Triebwerk nach Anspruch 1, **dadurch gekennzeichnet, dass** der zumindest eine Hohlraum (24) in eine mittlere Kammer (54) und zwei seitliche Kammern (56, 58) durch das Vorhandensein von zwei verformbaren piezoelektrischen Membranen unterteilt ist, die zwischen der mittleren Kammer (54) und der bzw. den Innenwänden des zumindest einen Hohlraums (24) angeordnet sind.

8. Triebwerk nach einem der Ansprüche 1 bis 7, **dadurch gekennzeichnet, dass** das System zur Lärmminderung mehrere Pulsationsmittel aufweist, die parallel angeordnet sind.

9. Triebwerk nach einem der Ansprüche 1 bis 8, **dadurch gekennzeichnet, dass** das System zur Lärmminderung mehrere Pulsationsmittel aufweist, die parallel angeordnet und dazu geeignet sind, den Ausstoß des Fluidstrahls am Düsenauslass zu bewirken.

10. Triebwerk nach einem der Ansprüche 1 bis 9, **dadurch gekennzeichnet, dass** das System zur Lärmminderung mehrere Pulsationsmittel aufweist, die parallel angeordnet und dazu geeignet sind, die Geschwindigkeit des Fluidstrahls zur Änderung des in dem zumindest einen Hohlraum enthaltenen Volumens zu modulieren.

11. Luftfahrzeug, das ein Triebwerk nach einem der Ansprüche 1 bis 10 umfasst.

## Claims

1. Aircraft jet engine, comprising a nozzle (2) intended to eject a gas stream and a system for reducing noise (3) generated by the ejection of the gas stream, **characterized in that** the said system comprises:
- at least one ejection duct (11a) which, on the one hand, is connected upstream to at least one cavity (24) divided into several chambers (54, 56, 58) and, on the other hand, opens, downstream, at the nozzle outlet (2) so as to eject at least one fluid jet intended to interact with the ejected gas stream,
- at least one pulsation means (12) of the fluid jet able to bring about ejection of the said fluid jet at the nozzle outlet and/or to modulate its speed by varying a volume inside the said at least one cavity (24),
the system being configured for the balancing of the static pressures between the chambers (54, 56, 58), the said at least one pulsation means (2) comprising one piezoelectric device that is able to cause the said volume inside the said at least one cavity to vary, the balancing of the static pressures between the chambers (54, 56, 58) being achieved by the communication of the chambers (54, 56, 58) with each other at the inlet of the fluid in the said at least one cavity (24), **characterized in that** the fluid comes from a fluid providing duct connected on the one hand to a fluid inlet and on the other hand to the cavity, and is ejected out of the cavity through the ejection duct.

2. Aircraft jet engine according to claim 1, **characterized in that** the piezoelectric device for volume variation comprises at least one piezoelectric deformable membrane (20, 22) disposed in the said at least one cavity (24).

3. Aircraft jet engine according to one of claims 1 to 2, **characterized in that** the pulsation means (12) comprises a compressed air supply.

4. Jet engine according to one of claims 1 to 3, **characterized in that** the pulsation means (12) is driven by a servo-mechanism.

5. Jet engine according to claim 4, **characterized in that** the volume variation inside the said at least one cavity (24) is achieved by exciting either the mechanical resonance of the said at least one piezoelectric deformable membrane (20, 22), or the mechanical resonance of the said at least one piezoelectric deformable membrane (20, 22) and the acoustic resonance of the said at least one cavity (24).

6. Jet engine according to claim 5, **characterized in that** the acoustic resonance of the said at least one cavity (24) is excited by amplitude modulation of a carrier wave of the electric signal intended to excite the said at least one piezoelectric deformable membrane (20, 22).

7. Jet engine according to claim 1, **characterized in that** the said at least one cavity (24) is divided into a central chamber (54) and two side chambers (56, 58) by the presence of two piezoelectric deformable membranes disposed between the central chamber (54) and the inner wall or walls of the said at least one cavity (24).

8. Jet engine according to one of claims 1 to 7, **characterized in that** the system for reducing noise comprises several pulsation means disposed in parallel.

9. Jet engine according to one of claims 1 to 8, **characterized in that** the system for reducing noise comprises several pulsation means disposed in parallel and which are able to bring about ejection of the fluid jet at the nozzle outlet.

10. Jet engine according to one of claims 1 to 9, **characterized in that** the system for reducing noise comprises several pulsation means disposed in parallel and which are able to modulate the speed of the fluid jet by varying the volume contained in the said at least one cavity.

11. Aircraft comprising a jet engine according to one of claims 1 to 10.
